# FASCICULE DE BREVET EUROPEEN

(11) **EP 2 815 118 B1**
(45) Date de publication et mention de la délivrance du brevet: **20.04.2016**
(21) Numéro de dépôt: 13710461.8
(22) Date de dépôt: 15.02.2013
(51) Int. Cl.: F02K 1/82, F01D 25/30, F02C 7/24

(54) **CÔNE D'ECHAPPEMENT AVEC SYSTEME D'ATTENUATION ACOUSTIQUE**
AUSLASSKONUS MIT SCHALLDÄMPFUNGSANORDNUNG
EXHAUST CONE WITH ACOUSTIC ATTENUATION SYSTEM

(30) Priorité: 17.02.2012 FR 1251472
(43) Date de publication de la demande: 24.12.2014
(73) Titulaire: HERAKLES, 33185 Le Haillan (FR)
(72) Inventeur: MECUSON, Gautier, F-33200 Bordeaux (FR); CONETE, Eric, F-33700 Merignac (FR)
(74) Mandataire: Desormiere, Pierre-Louis
(86) Numéro de dépôt international: PCT/FR2013/050311
(87) Numéro de publication internationale: WO 2013/121155

(56) Documents cités:
- EP-A1- 1 843 032
- EP-A2- 1 391 597
- FR-A1- 2 952 052
- US-A- 5 594 216
- US-A1- 2006 207 826
- US-A1- 2009 263 627

## Description

### Arrière-plan de l'invention

La présente invention concerne les cônes d'échappement utilisés dans les arrière-corps de moteurs aéronautiques.

Afin de réduire le bruit dans les conduits d'écoulement au niveau des cônes d'échappement des moteurs aéronautiques, il est connu de doter une partie de la surface de ces cônes de panneaux d'atténuation acoustiques. Ces panneaux sont typiquement constitués d'une peau ou paroi de surface multiperforée perméable aux ondes acoustiques que l'on souhaite atténuer et d'une paroi pleine réfléchissante, des caissons ou un corps cellulaire, tel qu'un nid d'abeille, étant disposés entre ces deux parois. De façon bien connue, de tels panneaux forment des résonateurs de type Helmholtz qui permettent d'atténuer dans une certaine gamme de fréquences les ondes acoustiques produites dans le conduit.

Les éléments constitutifs de ce type de panneau sont en général réalisés en matériau métallique. Les cloisons des caissons ou du corps cellulaire sont en général liées aux parois par brasage et participent à la tenue structurale de la pièce sur laquelle elles sont montées.

Cependant, ce type de système d'atténuation acoustique présente plusieurs inconvénients. Il augmente tout d'abord la masse globale du cône d'échappement ce qui est pénalisant dans le domaine aéronautique où le gain de masse est une préoccupation constante.

En outre, la fabrication de ce type de système est relativement délicate, en particulier en ce qui concerne l'assemblage et le centrage des peaux métalliques multiperforées sur la structure axisymétrique du cône.

Par ailleurs, en raison du coefficient de dilatation élevé des matériaux métalliques, les peaux multiperforées doivent être découplées mécaniquement de la structure porteuse interne du cône, ce qui complique la réalisation du système d'atténuation acoustique.

Des exemples de réalisation de cône d'échappement incorporant un système d'atténuation acoustique sont notamment décrits dans les documents US 2009/263627, US 5 594 216 et EP 1 391 597.

### Objet et résumé de l'invention

La présente invention a pour but de proposer une nouvelle conception de cône d'échappement apte à assurer une fonction d'atténuation acoustique, et ce sans pénaliser la masse globale du cône et sans nécessiter un découplage des éléments constitutifs du système d'atténuation acoustique du reste de la structure.

A cet effet, le cône d'échappement selon la présente invention comprend un noyau structural en matériau composite formé d'une pièce axisymétrique comportant à son extrémité amont un flaque amont et à son extrémité aval un flasque aval, ledit noyau assurant la résistance structurale du cône, ledit cône comprenant en outre un systèmes d'atténuation acoustique réalisé en matériau composite et fixé sur le noyau structural,
caractérisé en ce que le système d'atténuation acoustique comprend des cloisons longitudinales en matériau composite fixées sur les flasques amont et aval par des moyens de liaison mécaniques et des cloisons transversales en matériau composite fixées sur les cloisons longitudinales par des moyens de liaison mécaniques, lesdites cloisons longitudinales et transversales délimitant des caissons résonateurs.

Ainsi, en dotant le cône d'échappement d'un noyau structural en matériau composite selon l'invention, il est possible d'intégrer dans le cône d'échappement un système d'atténuation acoustique également réalisé en matériau composite mais qui, dans ce cas, n'a pas besoin d'être découplé du noyau. En effet, en l'absence de dilatations thermiques différentielles entre le système d'atténuation acoustique et le noyau, les pièces constitutives de ces deux ensembles peuvent être mécaniquement liées entre elles, ce qui simplifie grandement l'intégration d'un système d'atténuation acoustique tout en réduisant la masse globale du cône d'échappement.

En outre, grâce à l'utilisation d'un noyau structural formant une structure autoporteuse, le système d'atténuation acoustique n'a pas besoin d'avoir des caractéristiques structurales. Par conséquent, le système d'atténuation acoustique peut être réalisé avec des pièces très minces permettant d'alléger encore la masse globale du cône d'échappement.

Par ailleurs, des caissons résonateurs sont formés sur le noyau structural par des cloisons longitudinales et transversales montées respectivement sur les flasques du noyau et sur les cloisons longitudinales par des moyens de liaison mécaniques, ce qui simplifie la formation des caissons résonateurs car le montage des cloisons avec des moyens de liaison mécaniques permet des reprises de forme et augmente la tolérance entre les pièces à assembler en comparaison avec un montage réalisé par collage qui nécessite un ajustement précis entre les pièces et l'absence de jeu entre celles-ci pour obtenir une liaison fiable.

Selon une caractéristique particulière de l'invention, les cloisons longitudinales sont fixées respectivement sur les flasques amont et aval par des moyens de liaison mécaniques réversibles et en ce que les cloisons transversales sont fixées sur les cloisons longitudinales par des moyens de liaison mécaniques réversibles de manière à former un assemblage démontable. Dans ce cas, les cloisons formant les caissons résonateurs peuvent être facilement démontées et remplacées en cas d'usure ou d'endommagement lors des opérations de maintenance. Une telle réparabilité ne peut pas être obtenue dans le cas d'un assemblage par collage, le système d'atténuation acoustique devant être dans ce cas entièrement remplacé même si seulement un nombre limité de pièces de celui-ci doivent être remplacées.

Selon une autre caractéristique particulière de l'invention, le noyau structural est réalisé en matériau composite comprenant un renfort fibreux en fibres réfractaires densifié par une matrice au moins partiellement céramique. Dans ce cas, le noyau structural peut être notamment réalisé en matériau composite comprenant un renfort fibreux en fibres de carbure de silicium densifié par une matrice en carbure de silicium comportant une ou plusieurs phases auto-cicatrisantes.

Selon une autre caractéristique de l'invention, le système d'atténuation acoustique comprend des cloisons longitudinales et transversales en matériau composite fixées sur le noyau structural, lesdites cloisons délimitant des caissons résonateurs. Les cloisons n'ayant pas de rôle structural, elles peuvent être réalisées avec une épaisseur relativement fine comprise entre 0,7 mm et 1,5 mm.

Selon encore une autre caractéristique de l'invention, le système d'atténuation acoustique comprend en outre une peau multiperforée en matériau composite fixée entre le flasque amont et le flasque avant du noyau, ladite peau multiperforée fermant la partie supérieure des caissons résonateurs. De même que pour les cloisons, la peau multiperforée n'ayant pas de fonction structurale, elle peut être d'une épaisseur relativement fine comprise entre 0,7 mm et 1,5 mm.

L'invention concerne également un arrière-corps de moteur aéronautique comprenant un cône d'échappement selon l'invention.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique en perspective d'un cône d'échappement conformément à un mode de réalisation de l'invention;
- la figure 2 est vue schématique en perspective du noyau structural du cône d'échappement de la figure 1 ;
- la figure 3 est une vue schématique en perspective du noyau de la figure 2 équipé de cloisons formant des caissons d'atténuation acoustique.

### Description détaillée d'un mode de réalisation

Un domaine particulier mais non exclusif d'application de l'invention, est celui des cônes d'échappement de moteurs aéronautiques tels que ceux utilisés dans les avions ou les hélicoptères.

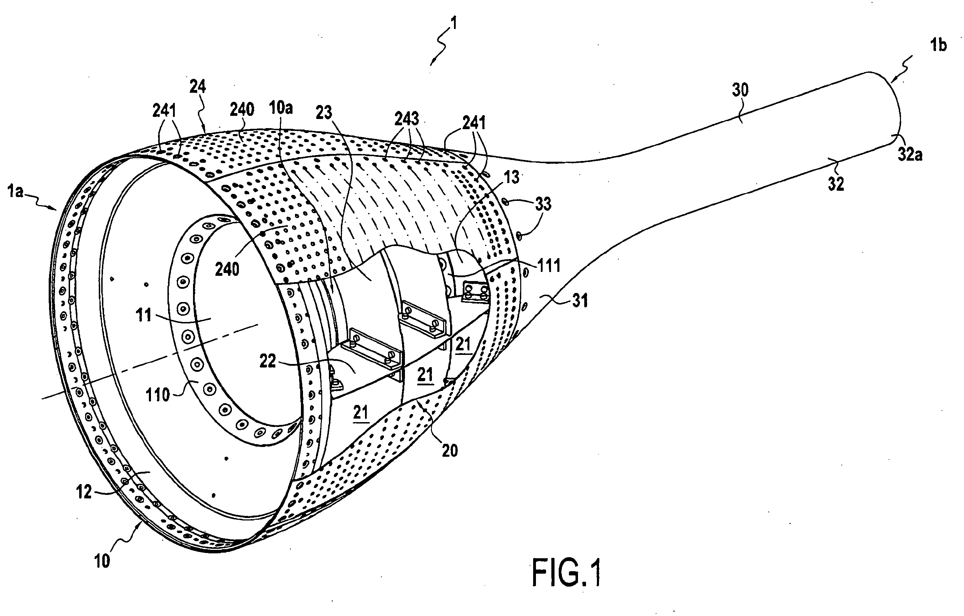

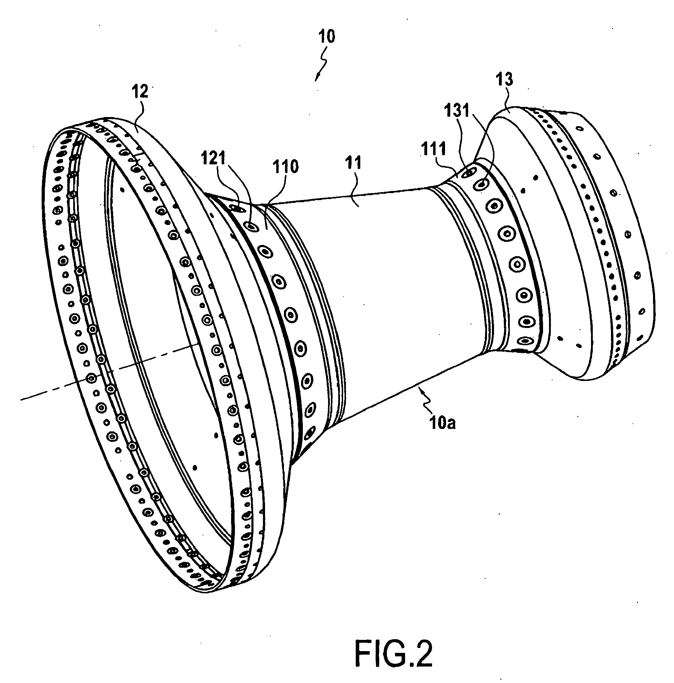

La figure 1 représente un cône d'échappement 1 conformément à un mode de réalisation de l'invention. Le cône d'échappement 1 comprend un noyau 10 constitué d'une pièce axisymétrique 11 qui présente une extrémité amont 110 et une extrémité aval 111 de forme évasée et auxquelles sont respectivement fixés un flasque amont 12 et un flasque aval 13 (figure 2). Un système d'atténuation acoustique 20 est monté sur le noyau 10. Le système d'atténuation acoustique 20 comprend une pluralité de caissons résonateurs 21. Le fond des caissons résonateurs 21 est délimité par la paroi externe 10a du noyau 10. Les parois latérales des caissons sont délimitées par des cloisons longitudinales 22 et transversales 23. Les caissons résonateurs 21 sont fermés par une peau multiperforée 24 formant la paroi externe du cône d'échappement autour du noyau 10. Les caissons résonateurs 21 absorbent un maximum d'énergie autour de leur fréquence de résonance qui est déterminée en fonction des dimensions des caissons de type Helmholtz et permettent d'atténuer dans une certaine gamme de fréquences les ondes acoustiques produites dans le conduit délimité entre le cône d'échappement 1 et la tuyère d'échappement (non représentée sur la figure 1).

Le cône d'échappement comprend encore une partie terminale 30 formée d'une pièce tronconique présentant une première partie 31 de forme évasée qui est fixée au flasque aval 13 et qui se prolonge par une portion tubulaire 32 dont l'extrémité libre 32a correspond à l'extrémité aval 1b du cône d'échappement 1. Le cône comprend aussi une bride de fixation en matériau métallique (non représentée sur la figure 1), par exemple en Inconel® 718, qui permet de fixer l'extrémité amont 1a du cône 1 sur le carter d'échappement du moteur (non représenté sur la figure 1). La bride de fixation est fixée sur le flasque amont via des pattes de fixation élastiques afin de compenser les dilatations différentielles entre le matériau de la bride de fixation et le matériau du flasque amont.

Conformément à l'invention, noyau 10 est réalisé en matériau composite thermostructural, c'est-à-dire en un matériau apte à former des pièces de structure qui présentent de bonnes caractéristiques mécaniques et qui sont aptes à les conserver à température élevée. En d'autres termes, le matériau composite thermostructural confère aux pièces constitutives du noyau une résistance mécanique suffisante pour être autoporteuse, c'est-à-dire pour résister aux efforts auxquels est soumis le cône mais aussi pour supporter d'autres éléments du cône non structuraux tels qu'un système d'atténuation acoustique comme décrit ci-après. Afin d'assurer leur fonction structurale, les pièces constitutives du noyau sont réalisées avec des épaisseurs suffisantes pour assurer cette fonction. A titre d'exemple, pour un cône d'échappement d'une longueur totale de 180 cm environ et d'un diamètre au niveau de sa partie de raccordement au carter d'échappement compris entre 600 et 800 mm, les pièces constitutives du noyau 10 sont réalisées en matériau CMC, la pièce axisymétrique présentant une épaisseur comprise entre 1 mm et 3 mm tandis que les flasque présentent une épaisseur comprise entre 2 mm et 5 mm.

La pièce axisymétrique 11 et les flasques 12 et 13 sont réalisés notamment en matériau composite carbone/carbone (C/C) qui, de façon connue, est un matériau formé d'un renfort en fibres de carbone densifié par une matrice en carbone ou en matériau composite CMC qui, de façon connue, est un matériau formé d'un renfort en fibres de carbone ou céramique densifié par une matrice au moins partiellement céramique. Les matériaux composites thermostructuraux, comme le matériau C/C ou CMC, sont caractérisés par leurs propriétés mécaniques élevées qui les rendent aptes à constituer des pièces de structure et par leur capacité à conserver ces propriétés mécaniques à des températures élevées pouvant aller au-delà de 1300°C dans le cas du matériau C/C ou CMC. La pièce axisymétrique 11 et les flasques 12 et 13 sont de préférence réalisés en matériau CMC, tel que le matériau Cerasep® A40C qui est formé d'un renfort en fibres de carbure de silicium (SiC) et d'une matrice céramique, par exemple SiC, auto-cicatrisante.

La fabrication de pièces en matériau composite, notamment C/C ou CMC, est bien connue. Elle comprend généralement la réalisation d'une préforme fibreuse et la densification de cette préforme par la matrice en fibres réfractaires. La préforme fibreuse ayant une forme voisine de celle de la pièce à fabriquer est réalisée en fibres réfractaires, c'est-à-dire des fibres en céramique, par exemple en carbure de silicium (SiC), des fibres en carbone ou même encore des fibres en un oxyde réfractaire, par exemple en alumine (Al₂O₃).

La préforme fibreuse constitue le renfort de la pièce dont le rôle est essentiel vis-à-vis des propriétés mécaniques. La préforme est obtenue à partir de textures fibreuses en fibres réfractaires. Les textures fibreuses utilisées peuvent être de diverses natures et formes telles que notamment:
- tissu bidimensionnel (2D),
- tissu tridimensionnel (3D) obtenu par tissage 3D ou multicouches tel que notamment décrit dans le document WO 2010/061140 et dont le contenu est incorporé ici par référence,
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

On peut aussi utiliser une structure fibreuse formée de plusieurs couches superposées de tissu, tresse, tricot, feutre, nappes, câbles ou autres, lesquelles couches sont liées entre elles par exemple par couture, par implantation de fils ou d'éléments rigides ou par aiguilletage.

La mise en forme est réalisée par bobinage filamentaire, enroulage de nappe UD sur un mandrin, tissage, empilage, aiguilletage de strates bidimensionnelles/tridimensionnelles ou de nappes de câbles, etc.

Avant sa densification, la préforme fibreuse peut être consolidée afin de lui conférer une certaine tenue mécanique lui permettant de conserver sa mise en forme lors des manipulations.

Dans le cas d'un matériau C/C, la densification de la préforme fibreuse peut être réalisée par voie liquide en imprégnant cette dernière avec une résine précurseur de la matrice carbone telle qu'une résine de type phénolique.

Après imprégnation, la préforme fibreuse destinée à constituer le renfort fibreux de la pièce à réaliser, et ayant une forme correspondant sensiblement à celle de cette pièce, est mise en forme par conformation à l'aide d'un outillage de maintien. La ou les résines sont ensuite transformées (polymérisation/carbonisation) par traitement thermique. Les opérations d'imprégnation et de polymérisation/carbonisation peuvent être répétés plusieurs fois si nécessaire pour obtenir des caractéristiques mécaniques déterminées.

La densification de la préforme fibreuse peut-être également réalisée, de façon connue, par voie gazeuse par infiltration chimique en phase vapeur de la matrice carbone (CVI).

Une densification combinant voie liquide et voie gazeuse est parfois utilisée pour faciliter la mise en oeuvre, limiter les coûts et les cycles de fabrication tout obtenant des caractéristiques satisfaisantes pour l'utilisation envisagée.

Les matériaux CMC qui peuvent être utilisés pour réaliser la pièce axisymétrique et les flaques constituant le noyau structural du cône de l'invention sont formés par un renfort fibreux en fibres de carbone ou céramique qui est densifié par une matrice au moins partiellement céramique, notamment carbure, nitrure, oxyde réfractaire, etc., comme par exemple :
- un matériau composite carbone/carbone-carbure de silicium (C/C-SiC) qui est un matériau formé d'un renfort en fibres de carbone et densifié par une matrice comprenant une phase carbone et une phase carbure de silicium,
- un matériau composite carbone/carbure de silicium (C/SiC) qui est un matériau formé d'un renfort en fibres de carbone densifié par une matrice en carbure de silicium,
- un matériau composite carbure de silicium-carbure de silicium (SiC/SiC) qui est un matériau formé d'un renfort en fibres de carbure de silicium densifié par une matrice en carbure de silicium.
Dans le cas du matériau C-C/SiC, la première phase carbone de la matrice est déposée en premier afin d'être présente au plus près des fibres et recouverte ensuite par la deuxième phase SiC, ce qui permet de former sur la première phase carbone une couche de protection contre l'oxydation en SiC.

Dans le cas d'une densification par voie liquide, on utilise pour la matrice (ou phase céramique de celle-ci) une résine précurseur de céramique qui peut être par exemple une résine polycarbosilane précurseur de carbure de silicium (SiC), ou une résine polysiloxane précurseur de SiCO, ou une résine polyborocarbosilazane précurseur de SiCNB, ou une résine polysilazane (SiCN). Dans le cas d'un matériau C-C/SiC, la préforme fibreuse est d'abord imprégnée avec une résine précurseur de la phase carbone de la matrice telle qu'une résine de type phénolique.

Dans le cas d'une densification par voie gazeuse par infiltration chimique en phase vapeur de la matrice (CVI), on utilise pour la matrice (ou phase céramique de celle-ci) un précurseur gazeux de SiC qui peut être, par exemple, lors de la réalisation d'un matériau C-SiC, du méthyltrichlorosilane (MTS) donnant du SiC par décomposition du MTS. Lors de la réalisation d'un matériau C-C/SiC, la première phase carbone peut être formée avec des gaz hydrocarbures tels que méthane et/ou propane donnant le carbone par craquage, la deuxième phase SiC étant ensuite déposée sur la première phase carbone, par exemple par décomposition du MTS.

Les densifications par voie liquide et voix gazeuse peuvent être bien entendu combinées entre elles.

Dans l'exemple décrit ici, la pièce axisymétrique 11 et les flasques 12 et 13 sont réalisés individuellement en matériau composite CMC de type Cerasep® A40C. Pour chacune de ces pièces, on réalise tout d'abord une texture fibreuse en fibres de SiC. Une fois constituée, la texture fibreuse est mise en forme et consolidée par imprégnation de cette dernière avec une composition liquide contenant une résine de consolidation précurseur de céramique.

A cet effet, la texture fibreuse est immergée dans un bain contenant la résine et habituellement un solvant de celle-ci. Après égouttage, un séchage est réalisé en étuve. Le séchage peut être accompagné d'une pré-réticulation ou réticulation partielle de la résine. Une telle pré-réticulation apportant une raideur supplémentaire, elle doit, si elle est réalisée, rester limitée pour préserver une déformabilité suffisante de la texture fibreuse.

D'autres techniques connues d'imprégnation peuvent être utilisées telles que préparation d'un pré-imprégné par passage de la texture fibreuse dans une imprégnatrice en continu, imprégnation par infusion, ou encore imprégnation par RTM ("Resin Transfer Moulding").

La résine de consolidation est choisie pour laisser, après pyrolyse, un résidu céramique suffisant pour assurer la consolidation de la préforme fibreuse réalisée ensuite.

Une résine précurseur de céramique peut être par exemple une résine polycarbosilane précurseur de carbure de silicium (SiC), ou une résine polysiloxane précurseur de SiCO, ou une résine polyborocarbosilazane précurseur de SiCNB, ou une résine polysilazane (SiCN).

Après imprégnation, une préforme fibreuse destinée à constituer le renfort fibreux de la pièce à réaliser, et ayant une forme correspondant sensiblement à celle de cette pièce, est mise en forme par conformation de la texture fibreuse à l'aide d'un outillage de maintien.

La mise en forme de la préforme fibreuse est de préférence accompagnée d'un compactage de la structure fibreuse afin d'augmenter le taux volumique de fibres dans le matériau composite de la pièce à réaliser.

Après mise en forme de la préforme, la réticulation de la résine est réalisée, ou achevée s'il y a eu pré-réticulation, la préforme étant dans un outillage.

Ensuite, la consolidation est achevée par un traitement thermique de pyrolyse de la résine. La pyrolyse est réalisée à une température par exemple d'environ 900°C à 1000°C.

La consolidation peut être également réalisée par infiltration chimique en phase gazeuse (CVI).

Après cette consolidation, la densification de la préforme fibreuse par une matrice céramique est poursuivie.

La densification est avantageusement réalisée par infiltration chimique en phase gazeuse (CVI), les paramètres du processus CVI et la nature de la phase gazeuse réactionnelle étant adaptés à la nature de la matrice à former. On peut ainsi enchaîner dans le même four les opérations de pyrolyse de la résine de consolidation et de densification.

La matrice céramique formée par CVI est une matrice SiC au moins en partie auto-cicatrisante, telle qu'une matrice silicium-bore-carbone (Si-B-C) ou une matrice carbure de bore (B₄C) ou encore une matrice séquencée avec des phases de matrices alternées en céramique non cicatrisante et en céramique cicatrisante. On pourra se référer notamment aux documents FR 2 401 888, US 5 246 736, US 5 965 266, US 6 068 930 et US 6 291 058.

La matrice céramique peut être déposée en plusieurs cycles d'infiltration successifs avec entre chaque cycle une opération d'usinage permettant de rouvrir la porosité du matériau en surface et de faciliter le dépôt de la matrice dans le renfort fibreux.

On obtient alors comme illustré sur la figure 2, la pièce axisymétrique 11 et les flasques amont 12 et aval 13 en matériau composite CMC. Dans l'exemple décrit ici, le noyau 10 est obtenu par montage des flasques amont 12 et aval 13 respectivement aux extrémités amont 110 et aval 111 de la pièce axisymétrique 11 au moyen de liaisons boulonnées 121 et 131 comme représenté sur la figure 2. Les flasques peuvent être fixés à la pièce axisymétrique par d'autres moyens tels que par brasage. Par ailleurs, le noyau 10 peut être également réalisé en une seule pièce intégrant directement la pièce axisymétrique et les flasques amont et aval.

Une fois le noyau 10 réalisé, on procède au montage du système d'atténuation acoustique sur le noyau 10. Conformément à l'invention, le système d'atténuation acoustique est réalisé par assemblage de cloisons longitudinales et transversales par des moyens de liaison mécaniques tels que des liaisons type vis-écrou, des rivets, etc., ce qui offre une tolérance de montage importante. Les moyens de liaison mécaniques sont de préférence réversibles, tels que des systèmes vis-écrou, car il permettent de former un assemblage démontable du système d'atténuation acoustique conférant à celui-ci une réparabilité optimisée puisque seules les pièces usées ou endommagées sont remplacées. Dans le cas d'un assemblage des cloisons du système d'atténuation acoustique par collage ou brasage, le montage des cloisons nécessite une grande précision de forme et de dimensions entre les pièces à assembler car ce type de montage ne tolère pas ou très peu les variations dimensionnelles ou les jeux entre les pièces à assembler. Par conséquent, dans le cas d'un assemblage par collage ou brasage, la complexité et le coût de celui-ci sont plus importants que dans le cas d'un montage par des moyens de liaison mécaniques. En outre, lorsque les cloisons sont assemblées sur le noyau par collage ou brasage, le remplacement d'une ou plusieurs cloisons endommagées ou usées nécessite le remplacement de l'ensemble des cloisons et augmente, par conséquence, le coût de la maintenance du système d'atténuation acoustique et le temps d'immobilisation du moteur équipé du cône d'échappement.

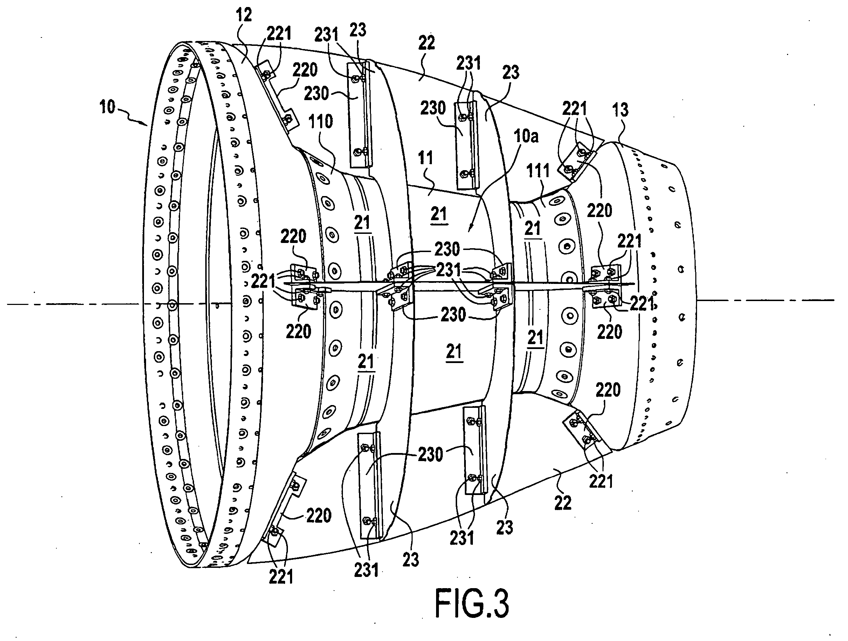

Comme représentées sur la figure 3, les cloisons longitudinales 22 sont fixées entre les flasques amont 12 et aval 13 au moyen de cornières 220 et de systèmes de liaison vis-écrou 221. Les cloisons transversales 23 sont fixées entre les cloisons longitudinales 22 également au moyen de cornières 230 et de systèmes de liaison vis-écrou 231 de manière à délimiter les caissons 21. Avant ou après le montage des cloisons, la partie terminale 30 est fixée sur le flasque aval 13 par des liaisons boulonnées 33 (figure 1).

L'ensemble des caissons 21 ainsi formé est alors fermée dans sa partie supérieure avec une peau multiperforée 24 qui est fixée, d'une part, au flasque amont 12 par des rivets 241 et, d'autre part, au flasque aval 13, par des rivets 242 comme représenté sur la figure 1.

La partie terminale 30, les cloisons 22 et 23 ainsi que la peau multiperforée 24 sont également réalisées en matériau composite C/C ou CMC. La fabrication de ces éléments est identique à celles décrites ci-avant. Toutefois, ces éléments n'ayant pas de fonction structurale, ils peuvent être réalisés avec des épaisseurs bien moins importantes que celles des pièces constitutives du noyau structural 10. Les cloisons 22 et 23 n'ayant pas de rôle structural, elles peuvent être d'une épaisseur très réduite, par exemple comprise entre 0,7 mm et 1,5 mm.

Dans le cas de la peau multiperforée 24, les multiperforations peuvent être notamment réalisées par usinage standard (par exemple par perçage au foret), au jet d'eau sous pression ou au laser, ou encore par implantation de picots dans le renfort fibreux et par retrait de ces derniers avec une presse après la densification. Selon une variante de réalisation, on peut former un renfort fibreux comportant des ouvertures multiples, par exemple par tissage d'une toile ajourée, qui ne sont pas totalement comblées lors de la densification de manière à permettre la formation des multiperforations. Dans l'exemple décrit ici, la peau multiperforée 24 est réalisée en une pluralité de secteurs 240 avec un chevauchement des bords longitudinaux de deux secteurs adjacents, ces bords étant reliés entre eux avec des rivets 243. Toutefois, la peau multiperforée peut être également réalisée en une seule pièce.

La peau multiperforée 24 n'ayant pas de rôle structural, elle peut être d'une épaisseur très réduite, par exemple comprise entre 0,7 mm et 1,5 mm, ce qui lui confère une grande souplesse et facilite son montage sur le cône d'échappement.

D'une manière générale, le ratio entre l'épaisseur des pièces structurales constitutives du noyau et l'épaisseur des pièces non structurales constitutives du système d'atténuation acoustique est compris entre 3 et 5.

Les cloisons 22 et 23 et la peaux multiperforée 24 sont de préférence réalisées avec le même matériau composite que celui utilisé pour fabriquer les pièces du noyau structural 10 comme par exemple en matériau composite CMC de type Cerasep® A40C.

## Revendications

1. Cône d'échappement (1) de moteur aéronautique s'étendant d'amont en aval suivant un axe longitudinal, ledit cône comprenant un noyau structural (10) en matériau composite formé d'une pièce axisymétrique (11) comportant à son extrémité amont un flasque amont (12) et à son extrémité aval un flasque aval (13), ledit noyau assurant la résistance structurale du cône, ledit cône comprenant en outre un système d'atténuation acoustique (20) réalisé en matériau composite et fixé sur le noyau structural (10),
**caractérisé en ce que** le système d'atténuation acoustique (20) comprend des cloisons longitudinales (22) en matériau composite fixées sur les flasques amont et aval (12, 13) par des moyens de liaison mécaniques et des cloisons transversales (23) en matériau composite fixées sur les cloisons longitudinales (22) par des moyens de liaison mécaniques, lesdites cloisons longitudinales et transversales délimitant des caissons résonateurs (21).

2. Cône d'échappement selon la revendication 1, **caractérisé en ce que** les cloisons longitudinales sont fixées respectivement sur les flasques amont et aval par des moyens de liaison mécaniques réversibles et **en ce que** les cloisons transversales sont fixées sur les cloisons longitudinales par des moyens de liaison mécaniques réversibles de manière à former un assemblage démontable.

3. Cône d'échappement selon la revendication 1 ou 2, **caractérisé en ce que** le noyau structural (10) est réalisé en matériau composite comprenant un renfort fibreux en fibres réfractaires densifié par une matrice au moins partiellement céramique.

4. Cône d'échappement selon la revendication 3, **caractérisé en ce que** le noyau structural (10) est réalisé en matériau composite comprenant un renfort fibreux en fibres de carbure de silicium densifié par une matrice en carbure de silicium comportant une ou plusieurs phases auto-cicatrisantes.

5. Cône d'échappement selon l'une quelconque des revendications 1 à 4, **caractérisé en ce que** les cloisons longitudinales (22) et transversales (23) présentent une épaisseur comprise entre 0,7 mm et 1,5 mm.

6. Cône d'échappement selon l'une quelconque des revendications 1 à 5, caractérisé en que le système d'atténuation acoustique (20) comprend en outre une peau multiperforée (24) en matériau composite fixée entre le flasque amont (12) et le flasque aval (13) du noyau (10), ladite peau multiperforée fermant la partie supérieure des caissons résonateur (21).

7. Cône d'échappement selon la revendication 6, **caractérisé en ce que** la peau multiperforée (24) présente une épaisseur comprise entre 0,7 mm et 1,5 mm.

8. Cône d'échappement selon l'une quelconque des revendications 1 à 7, **caractérisé en ce qu'**il comprend en outre une partie terminale (30) en matériau composite fixée sur le flasque aval (13) du noyau structural (10).

9. Arrière-corps de moteur aéronautique, **caractérisé en ce qu'**il comprend un cône d'échappement (1) selon l'une quelconque des revendications 1 à 8.

## Patentansprüche

1. Austrittskonus (1) eines Flugzeugtriebwerks, der sich von stromauf nach stromab entlang einer Längsachse erstreckt, wobei der Konus einen Strukturkern (10) aus Verbundwerkstoff umfasst, der von einem axialsymmetrischen Teil (11), das an seinem stromaufwärtigen Ende einen stromaufwärtigen Flansch (12) und an seinem stromabwärtigen Ende einen stromabwärtigen Flansch (13) umfasst, gebildet ist, wobei der Kern die Strukturfestigkeit des Konus sicherstellt, wobei der Konus ferner ein Schalldämpfungssystem (20), das aus Verbundwerkstoff gefertigt und an dem Strukturkern (10) befestigt ist, umfasst,
**dadurch gekennzeichnet, dass** das Schalldämpfungssystem (20) Längstrennwände (22) aus Verbundwerkstoff, die an dem stromaufwärtigen und dem stromabwärtigen Flansch (12, 13) durch mechanische Verbindungsmittel befestigt sind, und Quertrennwände (23) aus Verbundwerkstoff, die an den Längstrennwänden (22) durch mechanische Verbindungsmittel befestigt sind, umfasst, wobei die Längs- und die Quertrennwände Resonatorkästen (21) begrenzen.

2. Austrittskonus nach Anspruch 1, **dadurch gekennzeichnet, dass** die Längstrennwände jeweils an dem stromaufwärtigen und dem stromabwärtigen Flansch durch reversible mechanische Verbindungsmittel befestigt sind und dass die Quertrennwände an den Längstrennwänden durch reversible mechanische Verbindungsmittel befestigt sind, so dass eine lösbare Verbindung gebildet wird.

3. Austrittskonus nach Anspruch 1 oder 2, **dadurch gekennzeichnet, dass** der Strukturkern (10) aus Verbundwerkstoff mit einer Faserverstärkung aus feuerfesten Fasern, die durch eine wenigstens teilweise keramische Matrix verdichtet ist, gefertigt ist.

4. Austrittskonus nach Anspruch 3, **dadurch gekennzeichnet, dass** der Strukturkern (10) aus Verbundwerkstoff mit einer Faserverstärkung aus Siliziumkarbidfasern, die durch eine Siliziumkarbidmatrix mit einer oder mehreren selbstheilenden Phasen verdichtet ist, gefertigt ist.

5. Austrittskonus nach einem der Ansprüche 1 bis 4, **dadurch gekennzeichnet, dass** die Längstrennwände (22) und Quertrennwände (23) eine Dicke im Bereich zwischen 0,7 mm und 1,5 mm aufweisen.

6. Austrittskonus nach einem der Ansprüche 1 bis 5, **dadurch gekennzeichnet, dass** das Schalldämpfungssystem (20) ferner eine mehrfach perforierte Haut (24) aus Verbundwerkstoff, die zwischen dem stromaufwärtigen Flansch (12) und dem stromabwärtigen Flansch (13) des Kerns (10) befestigt ist, umfasst, wobei die mehrfach perforierte Haut den oberen Teil der Resonatorkästen (21) verschließt.

7. Austrittskonus nach Anspruch 6, **dadurch gekennzeichnet, dass** die mehrfach perforierte Haut (24) eine Dicke im Bereich zwischen 0,7 mm und 1,5 mm aufweist.

8. Austrittskonus nach einem der Ansprüche 1 bis 7, **dadurch gekennzeichnet, dass** er ferner einen Endteil (30) aus Verbundwerkstoff, der an dem stromabwärtigen Flansch (13) des Strukturkerns (10) befestigt ist, umfasst.

9. Heckteil eines Flugzeugtriebwerks, **dadurch gekennzeichnet, dass** es einen Austrittskonus (1) nach einem der Ansprüche 1 bis 8 umfasst.

## Claims

1. An exhaust cone (1) for an aeroengine extending from upstream to downstream along a longitudinal axis, said cone comprising a structural core (10) of composite material made up of an axisymmetric part (11) having an upstream endpiece (12) at its upstream end and a downstream endpiece (13) at its downstream end, said core providing the structural strength of the cone, said cone further comprising an acoustic attenuation system (20) made of composite material and fastened on the structural core (10); the exhaust cone being **characterized in that** the acoustic attenuation system (20) comprises longitudinal partitions (22) of composite material fastened to the upstream and downstream endpieces (12, 13) by connection means that are mechanical, and transverse partitions (23) of composite material fastened to the longitudinal partitions (22) by connection means that are mechanical, said longitudinal and transverse partitions defining resonator boxes (21).

2. An exhaust cone according to claim 1, **characterized in that** the longitudinal partitions are fastened respectively to the upstream and downstream endpieces by connection means that are mechanical and reversible, and **in that** the transverse partitions are fastened to the longitudinal partitions by connection means that are mechanical and reversible so as to form an assembly that can be dismantled.

3. An exhaust cone according to claim 1 or claim 2, **characterized in that** the structural core (10) is made of composite material comprising fiber reinforcement made of refractory fibers densified by a matrix that is at least partially made of ceramic.

4. An exhaust cone according to claim 3, **characterized in that** the structural core (10) is made of composite material comprising fiber reinforcement made of silicon carbide fibers densified by a silicon carbide matrix including one or more self-healing phases.

5. An exhaust cone according to any one of claims 1 to 4, **characterized in that** the longitudinal and transverse partitions (22, 23) present thickness lying in the range 0.7 mm to 1.5 mm.

6. An exhaust cone according to any one of claims 1 to 5, **characterized in that** the acoustic attenuation system (20) further comprises a multiply-perforated skin (24) of composite material fastened between the upstream endpiece (12) and the downstream endpiece (13) of the core (10), said multiply-perforated skin closing the top portions of the resonator boxes (21).

7. An exhaust cone according to claim 6, **characterized in that** the multiply-perforated skin (24) presents thickness lying in the range 0.7 mm to 1.5 mm.

8. An exhaust cone according to any one of claims 1 to 7, **characterized in that** it further includes a terminal portion (30) of composite material fastened to the downstream endpiece (13) of the structural core (10).

9. An aeroengine afterbody, **characterized in that** it includes an exhaust cone (1) according to any one of claims 1 to 8.
